# EUROPÄISCHE PATENTSCHRIFT

(11) **EP 1 514 587 B1**
(45) Veröffentlichungstag und Bekanntmachung des Hinweises auf die Patenterteilung: **30.03.2011**
(21) Anmeldenummer: 04021276.3
(22) Anmeldetag: 08.09.2004
(51) Int. Cl.: B01D 39/18, D21H 27/08

(54) **Filtermaterial**
Filter material
Matériau filtrant

(30) Priorität: 13.09.2003 DE 10342416
(43) Veröffentlichungstag der Anmeldung: 16.03.2005
(73) Patentinhaber: Outlast Technologies, Inc., Boulder, Co. 80301 (US); Glatfelter Gernsbach GmbH & Co. KG, 76593 Gernsbach (DE)
(72) Erfinder: Bentz, Martin, 89518 Heidenheim (DE); Meger, Danny, 76593 Gernsbach (DE)
(74) Vertreter: Lorenz, Werner

(56) Entgegenhaltungen:
- EP-A- 0 632 163
- EP-A- 0 785 013
- DE-A- 19 719 807
- DE-A- 19 931 402
- US-A- 2 433 531
- US-A1- 2002 034 913
- US-A1- 2002 124 953
- PATENT ABSTRACTS OF JAPAN Bd. 1996, Nr. 04, 30. April 1996 (1996-04-30) & JP 7 328359 A (MITSUBISHI NUCLEAR FUEL CO LTD), 19. Dezember 1995 (1995-12-19)

## Beschreibung

Die Erfindung betrifft ein Filtermaterial aus ein oder mehreren Lagen von Faserschichten zur Herstellung von Filterbeuteln und Filtertüten für Aufgussgetränke.

Im Allgemeinen erfolgt die Herstellung eines Filtermaterials aus Naturfasern oder einer Kombination von Naturfasern und synthetischen Fasern unter Verwendung einer Spezialpapiermaschine.

In einer ersten Stufe wird eine wässrige Suspension von Naturfasern auf ein bevorzugt schräg angestelltes Papiermaschinensieb aufgebracht, wobei die Fasersuspension über erste Entwässerungskammern geleitet wird. Dabei bildet sich auf dem bewegten Sieb eine erste Faserschicht aus den Naturfasern. Im Falle der Herstellung eines heißsiegelnden Filtermaterials aus Naturfasern und synthetischen Fasern werden dann in einer zweiten Stufe die heißsiegelnden, synthetischen Fasern in einer zweiten wässrigen Suspension bei der Weiterbewegung des Papiermaschinensiebs auf der ersten Schicht aus Naturfasern abgelegt und dann gemeinsam über weitere Entwässerungskammern geführt. Im Laufe der Weiterbewegung des Papiermaschinensiebs mit den beiden aufeinanderliegenden Faserschichten wird dann eine Trocknung vorgenommen, wobei die synthetischen Fasern an die erste Naturfaserschicht angeschmolzen werden und es dadurch zu einer teilweisen Durchdringung der beiden Schichten kommt. Das Filtermaterial ist dadurch heißsiegelnd geworden.

Die Trocknung kann auf der Papiermaschine durch eine Zylinderkontakttrocknung oder durch eine Durchströmtrocknung mit Hilfe heißer Luft erfolgen.

Nach der Trocknung wird das heißsiegelnde oder nichtheißsiegelnde Filtermaterial aufgerollt, anschließend auf angeforderte Breiten geschnitten und schließlich auf Abpackautomaten zu Beuteln geformt und mit einem Füllgut, z.B. Tee, gefüllt.

Bei der Verwendung eines Filtermaterials als Beutel für Tee und andere extrahierbare Füllgüter ist eine schnelle Auslaugung (Infusion) erwünscht.

Dabei ist es üblich, Tee mit einer hohen Anzahl von feinen Teepartikeln abzupacken. Wenn das Teefiltermaterial jedoch eine erwünschte hohe Porosität, d.h. Lochanzahl, aufweist, fallen durch die Poren feine Teepartikel hindurch, was beim Gebrauch und auch beim Transport der Beutel äußerst unerwünscht ist.

Eine Möglichkeit, diesen Nachteil zu verhindern, besteht darin, die Poren wesentlich kleiner, versetzter und verschlungener zu gestalten, so dass der Teestaubausfall reduziert wird. Allerdings nimmt dabei wieder die Teeinfusion ab.

In der EP 0 656 224 A1 wird ein Teefiltermaterial beschrieben, das aus einer Basisschicht und einer sogenannten schmelzgeblasenen (meltblown) Polymerschicht besteht. Bei diesem bekannten Teefiltermaterial sind ohne wesentliche Verschlechterung der Infusion die notwendigen Poren gegeneinander versetzt, so dass der Ausfall von Teestaub reduziert wird.

Gemäß der US-A-4 289 580 wird auf der Papiermaschine eine Perforation des Filtermaterial mit Hilfe von Wasserstrahlen durchgeführt, um die Teeinfusion zu optimieren.

In der EP 1 229 166 A1 wird ein Verfahren beschrieben, bei dem durch eine Perforation und/oder Prägung ein Filtermaterial filtrierfähiger gemacht wird.

Bei den derzeitig verwendeten Teefilterpapieren bildet sich jedoch ohne Bewegung des Beutels in der Auslaugflüssigkeit an der Grenzschicht Wasser-Filterpapier sehr schnell eine hohe Konzentration an extrahiertem Tee. Diese hohe Konzentration (Sperrkonzentration) behindert eine weitere Auslaugung des Füllgutes, da das Konzentrationsgefälle zwischen der Innenseite und der Außenseite des Beutels ohne Bewegung des Beutels nicht wieder hergestellt wird.

In der EP 1 215 134 A1 wird schließlich ein Filtermaterial beschrieben, in das quellfähige Absorberfasern eingearbeitet werden. Daraus hergestellte, gefüllte Teebeutel müssen in der Auslaugflüssigkeit nicht mehr bewegt werden, um eine optimale Infusion des Füllgutes zu gewährleisten.

Durch die Faserquellung wird eine Mikroverwirbelung erzeugt, die das notwendige Konzentrationsgefälle an der Papiergrenzfläche wieder herstellt.

Diese Mikroverwirbelung setzt jedoch voraus, dass die absorbierenden Fasern einen größeren Faserdurchmesser haben müssen, als die für die Herstellung des Filtermaterials üblichen Natur- und Polymerfasern. Eine Einarbeitung der Absorberfasern in das Filtermaterial und ihre Faser-Faser-Bindung erfordern daher zusätzliche chemische und technische Hilfsmittel.

Die DE 199 31 402 A betrifft Teebeutel und bezieht sich explizit auf Cellulosederivate, vornehmlich substituierte Ester, die mit einem Weichmacher beaufschlagt werden. Der Weichmacher ist assoziativ oder chemisch gebunden.

In der DE 197 19 807 A ist ein heißsiegelfähiges Filtermaterial mit biologisch abbaubaren Polymeren offenbart. Diese Druckschrift nennt als Komponente für die Herstellung von biologisch abbaubaren Teebeutelpapieren auf Polyester-Basis Terephthalsäure. Diese wird zur Faserherstellung verwandt und hat keinerlei Wirkung als Phasentransferreagenz. Auch hier ist keinerlei Bezug zur Mikroverkapselung vorhanden.

In der EP-A-0 632 163 sind poröse Filtermaterialien zum Herstellen von Aufgussgetränken beschrieben, wobei das Fasermaterial einer hydrophoben Behandlung unterzogen wird. Die Fasern werden dabei imprägniert, wobei als Imprägniermittel 0,3 - 30 % Gewichtsprozent Paraffin offenbart ist.

Die US-A-2 433 531 bezieht sich auf eine Verwendung von Filtern zum Filtern von Milch. In dieser Druckschrift ist ein hydrophob ausgerüsteter Milchfilter offenbart.

Aufgabe der vorliegenden Erfindung ist es, Filtermaterial zu schaffen, das die vorstehend erwähnten Nachteile des Standes der Technik vermeidet, insbesondere womit eine schnelle Infusion erreicht wird und zwar ohne dass feine Teepartikel durch das Filtermaterial hindurchtreten.

Erfindungsgemäß wird diese Aufgabe durch die im kennzeichnenden Teil von Anspruch 1 genannten Merkmale gelöst.

Ein Verfahren zur Herstellung eines erfindungsgemäßen Filtermaterials ist in Anspruch16 beschrieben.

In Anspruch 23 ist ein erfindungsgemäßer Teebeutel, Teefilter, Kaffeebeutel oder Kaffeefilter beansprucht.

Erfindungsgemäß werden Hohlfasern oder Mikrokapseln in das erfindungsgemäße Filtermaterial, mit sehr kleinen Faserabmessungen eingearbeitet, die aufgrund ihrer Zusammensetzung durch endotherme und exotherme Reaktion eine Mikroverwirbelung in der Auslaugflüssigkeit hervorrufen und auf diese Weise einen sehr schnellen Austausch bzw. Infusion bewirken.

Das erfindungsgemäße Filtermaterial hat in der Praxis eine wesentlich schnellere Infusion bzw. Auslaugung des zu extrahierenden Füllgutes gezeigt und zwar ohne dass Filtermaterialpartikel durch das Filtermaterial hindurchtreten. Es ergaben sich auf diese Weise deutlich verbesserte Farb- und Geschmackseigenschaften dergestalt, dass z.B. ein daraus gefertigter und mit einem auszulaugenden Gut gefüllter Beutel in wesentlich kürzerer Zeit als bekannte Filterbeutel bei einem Aufguss einen farb- und aromaintensiven Aufguss liefert.

Die erfindungsgemäßen Fasern bzw. Hohlfasern oder Mikrokapseln in dem Filtermaterial besitzen sehr kleine Faserabmessungen bzw. Mikrokapselgrößen, wodurch ein Durchtreten von Filterpartikeln zwar verhindert, gleichzeitig jedoch ein Flüssigkeitsaustausch nicht behindert wird. Das Gegenteil ist vielmehr der Fall.

Fasern oder Mikrokapseln mit Phasenübergangsmaterial sind z.B. in der EP 0 611 330 B1 und der US 2003/0035951 A1 beschrieben. Einsatzzweck der Fasern oder Mikrokapseln sind dabei Gewebe und Gewirke mit verbesserten thermischen Eigenschaften für Bekleidungsstücke. Bekleidungsstücke mit diesen Fasern oder Mikrokapseln absorbieren entstehende Körperwärme und setzen diese wieder frei, wenn es erforderlich ist. Bei dieser Methode macht man sich den physikalischen Effekt zunutze, dass beim Phasenübergang von fest auf flüssig, von flüssig auf gasförmig und umgekehrt Wärmeenergie freigesetzt wird bzw. verbraucht wird.

In überraschender Weise hat sich gezeigt, dass derartige Fasern oder Mikrokapseln mit Phasenübergangsmaterial, welches in das Filtermaterial integriert sind, einen stärkeren Sog bzw. eine Mikroverwirbelung bezüglich einer Auslaugung des Filtergutes erzeugen. Es wurde festgestellt, dass dies praktisch wie ein Golfstrom bzw. wie eine Vielzahl von Mikrogolfströmen mit einem sehr schnellen Auslaugungseffekt funktioniert.

Zur Herstellung von Aufgussgetränken werden Phasenübergangsmaterialien verwendet, die in einem Bereich von 0 bis 120 °C, vorzugsweise 50 bis 100 °C, ihren Phasenübergang von fest auf flüssig besitzen.

Das erfindungsgemäße Filtermaterial weist ein Flächengewicht zwischen 8 und 90 g/m², bevorzugt zwischen 10 und 25 g/m² auf.

Als Phasenübergangsmaterialien können die verschiedensten Materialien verwendet werden, wie z.B. Hydrokarbone, insbesondere paraffinische Hydrokarbone.

Grundsätzlich sind jedoch auch eine Vielzahl von Materialien verwendbar. Hierzu wird z. B. auf die in der US 2003/0035951 A1 und der EP 0 611 330 B1 beschriebenen Materialien, Beispielen nebst Herstellungsverfahren beschrieben.

Als Beispiele für Phasenübergangsmaterialien werden weiterhin genannt: hydralisierte Salze, Wachse, Öle, Fettsäuren, Fettsäuereester, dibasische Säuren, dibasische Ester, primäre Alkohole, polyhydrische Alkohole, Clathrate, Semi-Clathrate, stearische Anhydride, Ethylenkarbonate, Polymere und Mischungen daraus.

Die Fasern oder Mikrokapseln mit Phasenübergangsmaterial können in einer Menge zwischen 1 bis 70 Gew.-%, vorzugsweise 2 bis 30 Gew.-%, oder noch stärker bevorzugt zwischen 3 und 10 Gew.-% bezogen auf das Flächengewicht des Filtermaterials vorhanden sein.

Das Filtermaterial kann einlagig oder mehrlagig hergestellt werden. Im Falle von nur einer Lage besteht diese bevorzugt aus Nadelholzzellstoff und/oder Abaca-Fasern und einem entsprechenden Anteil von Fasern oder Mikrokapseln mit Phasenübergangsmaterial. Bei mehrlagiger Ausführung, als heißsiegelfähiges Material, kann die zweite Lage aus heißsiegelnden Polymerfasern bestehen.

Bei dem erfindungsgemäßen Verfahren können die Fasern oder Mikrokapseln mit Phasenübergangsmaterial der auf der Papiermaschine hergestellten ersten Lage zugegeben werden. Sie können in einem Gemisch mit den Naturfasern eingesetzt werden. Es ist jedoch auch möglich, die Fasern oder Mikrokapseln durch eine Auftragsvorrichtung in der Papiermaschine, z.B. einer Leimpresse, dem Papier zuzusetzen.

Vorteilhafte Weiterbildungen und Ausgestaltungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: den grundsätzlichen Aufbau einer Papierma- schine, wie sie zur Herstellung des erfin- dungsgemäßen Filtermaterials verwendet werden kann;
- Fig. 2: eine schematische Darstellung der Bildung des erfindungsgemäßen Filtermaterials in einem ersten Schritt mit Bildung der ersten Faser- schicht aus Naturfasern und die Bildung der zweiten Faserschicht aus synthetischen heiß- siegelnden Fasern;
- Fig. 3: einen zweiten Schritt mit teilweiser Durch- dringung der beiden Faserschichten durch die beschriebene Entwässerung;
- Fig. 4: einen weiteren Schritt, wobei durch eine Trocknung die synthetischen heißsiegelnden Fasern schmelzen und dann teilweise die Na- turfasern umhüllen; und
- Fig. 5: einen Querschnitt durch eine Mikrokapsel;
- Fig. 6: einen teilweisen Längsschnitt durch eine Mik- rofaser;
- Fig. 7: ein Diagramm über Versuche im Vergleich zum Stand der Technik;
- Fig. 8: ein weiteres Diagramm über Versuche im Ver- gleich zum Stand der Technik.

Zur Veranschaulichung wird das erfindungsgemäße Verfahren an Hand der Figuren am Beispiel eines zweilagigen Filtermaterials näher erläutert.

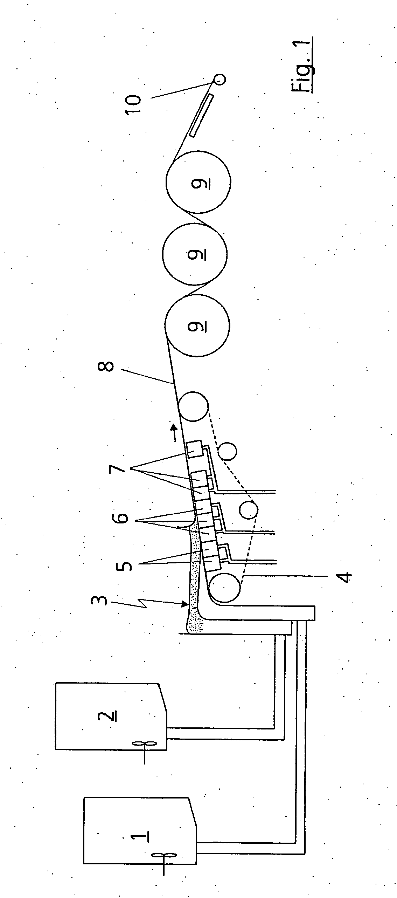

Gemäß Fig. 1 werden auf einer Papiermaschine zwei Fasersuspensionen A und B aus Behältern 3 und 4 auf einen Stoffauflauf 3 aufgebracht und über ein Papiermaschinensieb 4 der Papiermaschine zur Papierstoffbildung transportiert.

5, 6, 7 bezeichnen Entwässerungskammern, mit deren Hilfe das Wasser abgesaugt wird. Die notwendigen Rohrund Pumpvorrichtungen sind nicht näher dargestellt. 8 zeigt das jetzt gebildete Material aus Natur- und synthetischen Fasern. Naturfasern und Wasser kommen aus dem Behälter 1, synthetische Fasern und Wasser werden aus dem Behälter 2 zugegeben.

Das Material wird vom Papiermaschinensieb abgenommen und der Trocknung zugeführt. 9 zeigt schematisch drei Trockenzylinder, die im Kontaktverfahren das Material trocknen. Es ist jedoch auch möglich, das Material über einen Zylinder zu führen und mit Hilfe von durchströmender heißer Luft zu trocknen. Nach der Trocknung wird das Filtermaterial auf einer Rolle 10 aufgerollt. Nachfolgend erfolgt dann die Positionierung.

Die Fasern oder Mikrokapseln mit Phasenübergangsmaterial können bei der Herstellung auf der Papiermaschine entweder bereits direkt in den Behälter 1 mit den Naturfasern zugegeben werden oder auch nachträglich in einer Auftragseinrichtung, z.B. einer Leimpresse.

In vorteilhafter Weise wird man ein Bindemittel, z.B. Polyacrylat-Bindemittel (Acronal®), zugeben, damit die Mikrokapseln oder Mikrofasern an der gewünschten Faserschicht anhaften.

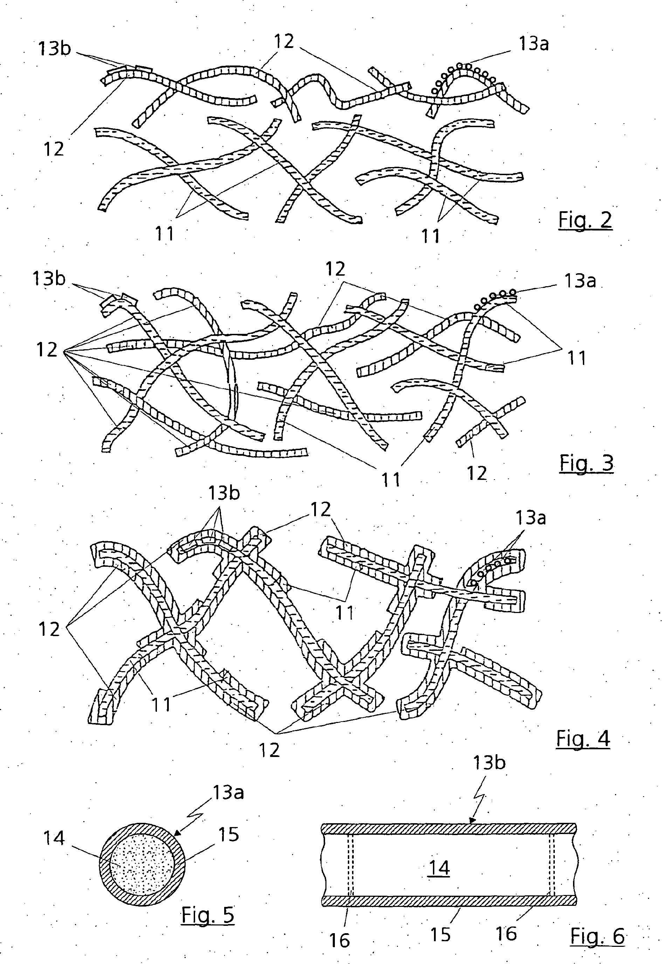

Die Figuren 2 bis 4 zeigen verschiedene Schritte zur Bildung des erfindungsgemäßen Filtermaterials in einer schematischen Darstellung.

Fig. 2 zeigt die Bildung einer ersten Faserschicht 11 aus Naturfasern und die Bildung einer zweiten Faserschicht aus synthetisch heißsiegelnden Fasern. Zusätzlich werden Mikrokapseln 13a oder Mikrofasern 13b mit Phasenübergangsmaterial 14 zugegeben. Die Mikrokapseln 13a oder die Mikrofasern 13b werden an die Naturfaserschicht 11 über ein Bindemittel aufgebracht.

Die Fig. 3 zeigt eine teilweise Durchdringung der Faserschichten 11, 12.

Fig. 4 zeigt in einem weiteren Schritt die Verbindung der Naturfaserschicht 11 mit der synthetisch heißsiegelnden Faserschicht 12 durch eine Trocknung. Wie ersichtlich umhüllen die synthetisch heißsiegelnden Fasern 12 teilweise die Naturfasern 11 und damit auch die Mikrokapseln 13a oder Mikrofasern 13b mit dem Phasenübergangsmaterial 14.

Fig. 5 zeigt schematisch in stark vergrößerter Darstellung eine Mikrokapsel 13a. Wie ersichtlich, weist diese eine Schutzhülle 15 auf, in deren Innerem sich das Phasenübergangsmaterial 14, z.B. paraffinische Kohlenwasserstoffe, befinden. Im allgemeinen nimmt man eine Mischung aus Kohlenwasserstoffen mit unterschiedlichen Phasenübergängen, damit ein möglichst weiter Temperaturbereich abgedeckt wird. Als Schutzhülle lässt sich z.B. eine Hülle aus Polyacryl verwenden.

Die Mikrokapseln werden in einer wässrigen Acrylatlösung suspendiert und mittels einer Leimpresse (Size-Press) in der Papiermaschine auf das Faservlies aufgetragen (siehe auch Beispiel 2). Das bedeutet, dass die Mikrokapseln keine eigene Schicht bilden, sondern im Papiervlies gleichmäßig durch die Schichtdicke verteilt sind.

Bei Verwendung von Stapelfasern, d.h. Fasern, die aus endlosen Fasern geschnitten werden, kann Ethylenphenylacetat in die Hohlfasern in gewissen Abständen in Form von trennenden Querwänden eingebracht werden, damit beim Schneiden nicht zu viel Phasenübergangsmaterial ausläuft.

Als Hohlfasern können Synthetikfasern verwendet werden. Die Hohlfasern mit dem Phasenübergangsmaterial können in gleicher oder ähnlicher Weise mit der Naturfaserschicht 11 verbunden werden, wie dies in den Figuren 2 bis 4 dargestellt ist.

In Fig. 6 ist in stark vergrößerter Darstellung ein Abschnitt einer Faser 13b als Hohlfaser im Längsschnitt dargestellt, in derem Inneren sich ebenfalls das Phasenübergangsmaterial 14 befindet. Die Hülle der Hohlfaser kann aus Polyester, Polyamid oder ähnlichem bestehen. In gestrichelter Darstellung sind zwei Zwischenwände 16 aus Ethylenphenylacetat eingezeichnet, damit bei der Bildung von Stapelfasern nicht zu viel Phasenübergangsmaterial 14 ausläuft. Bezüglich weiterer Details wird auf die US 2003/0035951 A1 verwiesen.

### Beispiele:

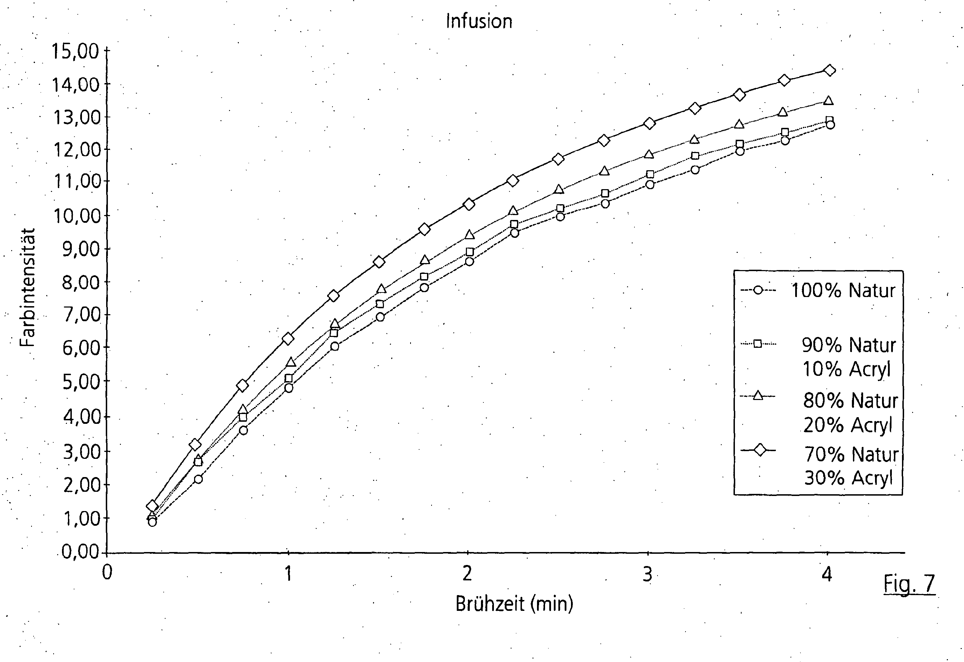

Die Verbesserung der Teeinfusion ist mit Hilfe einer Extinktionsmessung nachweisbar. Für diese Messung wurden Teebeutel aus dem erfindungsgemäßen Material in 13 g/m² hergestellt und mit unterschiedlichen Anteilen an Fasern oder Mikrokapseln mit Phasenübergangsmaterial versehen. Diese Beutel wurden mit ca. 2 g Schwarztee gefüllt und mit einer bestimmten Menge kochendem Wasser übergossen. Mit Hilfe eines Pumpwerkes wurde der entstandene gefärbte Tee im Kreislauf durch ein Fotometer geführt. Ein Lichtstrahl mit einer Wellenlänge von 445 nm durchstrahlte die durchgepumpte Flüssigkeit. Die gemessene Extinktion wurde digital aufgezeichnet. Die Extinktion ist ein Maß für die Schwächung eines Strahls durch die Absorption in der Flüssigkeit. Je höher die Extinktion um so dunkler ist der Teeaufguss.
1. In der Fasermischung für ein herkömmliches, nicht heißsiegelfähiges Teebeutelpapier wurden 10%, 20% und 30% Acrylfasern mit Mikrokapseln, in deren Innerem sich Phasenübergangsmaterial befindet, hinzugegeben. Die Faserabmessungen waren 2dtex, 2 bis 5 mm. Aus diesen Mischungen wurden Papierblätter mit 13 g/m² nassfest hergestellt. Aus diesen Blättern wurden Teebeutel gefertigt und mit 2,0 g Schwarztee gefüllt. Nach der oben geschilderten Messung wurde die Extinktion als Funktion der Aufbrühzeit gemessen. Als Blindprobe wurde ein unbehandelter Teebeutel geprüft. Die Fig. 7 zeigt das Ergebnis der Messung, aus der deutlich hervorgeht, dass mit der prozentualen Zunahme der Acrylfaser mit Mikrokapseln die Farbintensität des Tees im Vergleich mit 100 % Naturfasern deutlich intensiver wird.
2. In einem Ansatz mit 17,4 % Acronal® wurden je 1, 5 und 10 Gew.-% Mikrokapseln mit Phasenübergangsmaterial eingebracht. Mit Hilfe eines Rakels wurde ein nicht-heißsiegelfähiges Teebeutelpapier 13 g/m² mit den Ansätzen beschichtet. Anschließend erfolgte eine Aushärtung des Materials bei 120°C, 10 Min. Aus den getränkten Papieren wurden Doppelkammer-Teebeutel gefertigt und mit 2,0 g Schwarztee gefüllt.

Wie im ersten Versuch bereits beschrieben, wurde die Extinktion der Teebeutel als Funktion der Aufbrühzeit gemessen. Als Blindprobe wurde ein unbehandelter Teebeutel geprüft.

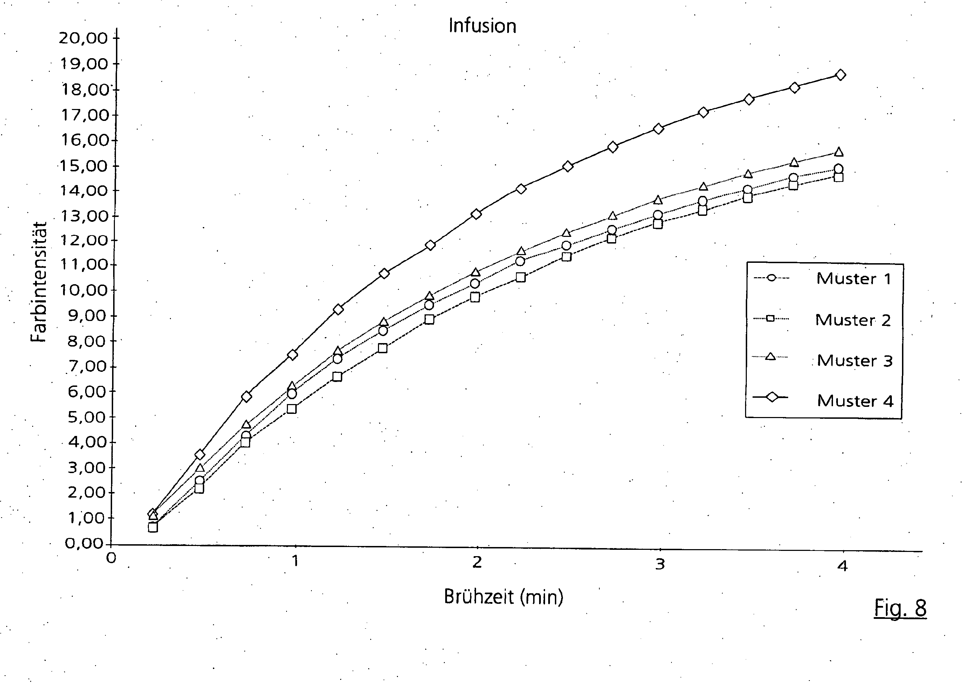

Fig. 8 zeigt das Ergebnis der Messung.

### Erklärung:

Muster 1 Blindprobe
Muster 2 1 % Mikrokapseln mit Phasenübergangsmaterial
Muster 3. 5 % Mikrokapseln mit Phasenübergangsmaterial
Muster 4 10 % Mikrokapseln mit Phasenübergangsmaterial

Auch aus diesem Versuch geht deutlich hervor, dass mit einer Zunahme der Mikrokapseln mit Phasenübergangsmaterial die Farbintensität des Tees deutlich intensiver wird. Im Vergleich zu der Blindprobe ohne Mikrokapseln wird die bei der Blindprobe nach 4 Minuten Brühzeit erhaltene Farbintensität bereits nach 2 Minuten, d.h. in der halben Zeit erreicht.

## Patentansprüche

1. Filtermaterial aus ein oder mehreren Lagen von Faserschichten zur Herstellung von Filterbeuteln und Filtertüten für Aufgussgetränke,
**dadurch gekennzeichnet, dass**
die wenigstens eine Faserschicht (11)zur Auslaugung von in den Filterbeuteln und Filtertüten vorhandenem Filtergut Hohlfasern (13b), in welche Phasenübergangsmaterialien (14) eingebracht sind oder Mikrokapseln (13a) mit Phasenübergangsmaterialien (14), die der wenigstens einen Faserschicht (11) hinzugegeben werden, enthält, wobei der Phasenübergang der Phasenübergangsmaterialien (14) von fest zu flüssig in einem Bereich von 0 bis 120 °C erfolgt und wobei das Flächengewicht des Filtermaterials zwischen 8 und 90 g/m² liegt.

2. Filtermaterial nach Anspruch 1,
**dadurch gekennzeichnet, dass**
Phasenübergangsmaterialien (14) vorgesehen sind, deren Phasenübergang von fest zu flüssig in einem Bereich von 50 bis 100 °C erfolgt.

3. Filtermaterial nach Anspruch 1 oder 2,
**dadurch gekennzeichnet, dass**
das Phasenübergangsmaterial (14) Kohlenwasserstoffe enthält.

4. Filtermaterial nach Anspruch 3,
**dadurch gekennzeichnet, dass** paraffinische Kohlenwasserstoffe vorgesehen sind.

5. Filtermaterial nach Anspruch 1,
**dadurch gekennzeichnet, dass**
als Phasenübergangsmaterial (14) hydralisierte Salze, Wachse, Öle, Fettsäuren, Fettsäuereester, dibasische Säuren und Ester, primäre Alkohole, polyhydrische Alkohole, Clathrate, Semi-Clathrate, stearische Anhydride, Ethylenkarbonate, Polymere und Mischungen daraus vorgesehen sind.

6. Filtermaterial nach Anspruch 1,
**dadurch gekennzeichnet, dass**
das die Hohlfasern (13b) oder Mikrokapseln (13a) in einer Menge zwischen 1 bis 70 Gew.-% bezogen auf das Flächengewicht des Filtermaterials enthalten sind.

7. Filtermaterial nach Anspruch 6,
**dadurch gekennzeichnet, dass**
das die Hohlfasern (13b) oder Mikrokapseln (13a) in einer Menge zwischen 2 bis 30 Gew.-% bezogen auf das Flächengewicht des Filtermaterials enthalten sind.

8. Filtermaterial nach Anspruch 7,
**dadurch gekennzeichnet, dass**
das die Hohlfasern (13b) oder Mikrokapseln (13a) in einer Menge zwischen 3 bis 10 Gew.-% bezogen auf das Flächengewicht des Filtermaterials enthalten sind.

9. Filtermaterial nach Anspruch 1,
**dadurch gekennzeichnet, dass**
das Flächengewicht zwischen 10 und 25 g/m² liegt.

10. Filtermaterial nach Anspruch 1,
**dadurch gekennzeichnet, dass**
zwei Lagen von Faserschichten (11,12) vorgesehen sind, wobei die erste Schicht (11) Naturfasern und die Hohlfasern (13b) oder Mikrokapseln (13a) umfasst, und auf die erste Faserschicht (11) die zweite Faserschicht (12) aus siegelfähigen Fasern, insbesondere Polymerfasern, aufgebracht ist.

11. Filtermaterial nach Anspruch 10,
**dadurch gekennzeichnet, dass**
die erste Faserschicht (11) aus Naturfasern, Nadelholzzellstoff, Laubholzzellstoff, Abaca-Fasern oder eine Mischung daraus aufweist.

12. Filtermaterial nach einem der Ansprüche 1 bis 11,
**dadurch gekennzeichnet, dass**
die Hohlfasern (13b) oder Mikrokapseln (13a) mit Phasenübergangsmaterial (14) mit einem Bindemittel in der Faserschicht gebunden sind.

13. Filtermaterial nach Anspruch 12,
**dadurch gekennzeichnet, dass**
als Bindemittel Polyacrylat (Acronal^{®}) vorgesehen ist.

14. Filtermaterial nach einem der Ansprüche 1 bis 13,
**dadurch gekennzeichnet, dass** in die Hohlfasern (13b) in gewissen Abständen trennende Querwände (16) eingebracht sind.

15. Filtermaterial nach Anspruch 14,
**dadurch gekennzeichnet, dass**
die trennenden Querwände (16) aus Ethylenphenylacetat gebildet sind.

16. Verfahren zur Herstellung eines Filtermaterials für Filterbeutel und Filtertüten für Aufgussgetränke aus einem oder mehreren Lagen von Faserschichten auf einer Papiermaschine nach einem der Ansprüche 1 bis 15,
**dadurch gekennzeichnet, dass**
zu wenigstens einer auf der Papiermaschine hergestellten Faserschicht (11) zur Auslaugung von in den Filterbeuteln und Filtertüten vorhandenem Filtergut Hohlfasern (13b), in welche Phasenübergangsmaterialien (14) eingebracht sind oder Mikrokapseln (13a) mit Phasenübergangsmaterialien (14), die der wenigstens einen Faserschicht (11) hinzufügt werden, zugegeben werden, wobei der Phasenübergang der Phasenübergangsmaterialien (14) zwischen der festen und der flüssigen Phase zwischen 0 und 120 °C liegt und wobei das Flächengewicht des Filtermaterials zwischen 8 und 90 g/m² liegt.

17. Verfahren nach Anspruch 16,
**dadurch gekennzeichnet, dass**
ein oder mehrere Phasenübergangsmaterialien (14) verwendet werden, deren Phasenübergang zwischen der festen und der flüssigen Phase zwischen 50 und 100 °C liegt.

18. Verfahren zur Herstellung eines Filtermaterials nach Anspruch 16 oder 17,
**dadurch gekennzeichnet, dass**
die Hohlfasern (13b) oder Mikrokapseln (13a) mit Phasenübergangsmaterial (14) in einer Auftragseinrichtung der Papiermaschine in einer Menge von 2 bis 30 Gew.-%, bezogen auf das Flächengewicht des Filtermaterials, auf das Filtermaterial aufgetragen werden.

19. Verfahren zur Herstellung eines Filtermaterials nach Anspruch 18,
**dadurch gekennzeichnet, dass**
die Hohlfasern (13b) oder Mikrokapseln (13a) mit Phasenübergangsmaterial (14) in einer Auftragseinrichtung der Papiermaschine in einer Menge von 3 bis 10 Gew.-%, bezogen auf das Flächengewicht des Filtermaterials, auf das Filtermaterial aufgetragen werden.

20. Verfahren nach einem der Ansprüche 16 bis 19,
**dadurch gekennzeichnet, dass**
die Hohlfasern (13b) oder Mikrokapseln (13a) mit Phasenübergangsmaterial (14) in eine der herzustellenden Faserschichten, insbesondere der ersten von zwei Lagen von herzustellenden Faserschichten (11,12), eingebracht werden, wobei die erste Schicht Naturfasern aufweist.

21. Verfahren nach einem der Ansprüche 16 bis 20,
**dadurch gekennzeichnet, dass**
die Hohlfasern (13b) oder Mikrokapseln (13a) in der herzustellenden Faserschicht, insbesondere der ersten Faserschicht (11), durch ein Bindemittel im Filtermaterial gebunden werden.

22. Verfahren nach Anspruch 21,
**dadurch gekennzeichnet, dass**
als Bindemittel Polyacrylat (Acronal^{®}) verwendet wird.

23. Teebeutel, Teefilter, Kaffeebeutel oder Kaffeefilter aus einer oder mehreren Lagen von Faserschichten,
**dadurch gekennzeichnet, dass**
die wenigstens eine Faserschicht (11,12) zur Auslaugung von in den Filterbeuteln und Filtertüten vorhandenem Filtergut Hohlfasern (13b), in welche Phasenübergangsmaterialien (14) eingebracht sind oder Mikrokapseln (13a) mit Phasenübergangsmaterialien (14), die der wenigstens einen Faserschicht (11) hinzugegeben werden, versehen ist, wobei der Phasenübergang der Phasenübergangsmaterialien (14) zwischen der festen und der flüssigen Phase zwischen 0 und 120 °C liegt und wobei das Flächengewicht des Filtermaterials zwischen 8 und 90 g/m² liegt.

24. Teebeutel, Teefilter, Kaffeebeutel oder Kaffeefilter nach Anspruch 23,
**dadurch gekennzeichnet, dass**
zwei Lagen von Faserschichten (11,12) vorgesehen sind, wobei die erste Schicht (11) Naturfasern und die Hohlfasern (13b) oder Mikrokapseln (13a) umfasst, und auf die erste Faserschicht (11) die zweite Faserschicht (12) aus siegelfähigen Fasern, insbesondere Polymerfasern, aufgebracht ist.

## Claims

1. Filter material made up of one or more layers of fibrous sheets for the production of filter bags for infusions,
**characterized in that**, for the extraction of product to be filtered that is present in the filter bags, the at least one fibrous sheet (11) contains hollow fibres (13b) in which phase transition materials (14) are incorporated, or microcapsules (13a) with phase transition materials (14) which are added to the at least one fibrous sheet (11), the phase transition of the phase transition materials (14) from solid to liquid taking place in the range from 0 to 120°C and the weight per unit area of the filter material being between 8 and 90 g/m².

2. Filter material according to Claim 1,
**characterized in that** phase transition materials (14) are provided whose phase transition from solid to liquid takes place in the range from 50 to 100 °C.

3. Filter material according to Claim 1 or 2,
**characterized in that** the phase transition material (14) contains hydrocarbons.

4. Filter material according to Claim 3,
**characterized in that** paraffinic hydrocarbons are provided.

5. Filter material according to Claim 1,
**characterized in that** hydrated salts, waxes, oils, fatty acids, fatty acid esters, dibasic acids and esters, primary alcohols, polyhydric alcohols, clathrates, semi-clathrates, stearic anhydrides, ethylene carbonates, polymers and mixtures thereof are provided as the phase transition material (14).

6. Filter material according to Claim 1,
**characterized in that** the hollow fibres (13b) or microcapsules (13a) are contained in an amount of between 1 and 70 wt.%, based on the weight per unit area of the filter material.

7. Filter material according to Claim 6,
**characterized in that** the hollow fibres (13b) or microcapsules (13a) are contained in an amount of between 2 and 30 wt.%, based on the weight per unit area of the filter material.

8. Filter material according to Claim 7,
**characterized in that** the hollow fibres (13b) or microcapsules (13a) are contained in an amount of between 3 and 10 wt.%, based on the weight per unit area of the filter material.

9. Filter material according to Claim 1,
**characterized in that** the weight per unit area is between 10 and 25 g/m².

10. Filter material according to Claim 1,
**characterized in that** two layers of fibrous sheets (11, 12) are provided, the first sheet (11) comprising natural fibres and the hollow fibres (13b) or microcapsules (13a), and the second fibrous sheet (12), made up of sealable fibres, especially polymer fibres, being applied to the first fibrous sheet (11).

11. Filter material according to Claim 10,
**characterized in that** the first fibrous sheet (11) contains natural fibres, softwood pulp, hardwood pulp, abaca fibres or a mixture thereof.

12. Filter material according to one of Claims 1 to 11,
**characterized in that** the hollow fibres (13b) or microcapsules (13a) with phase transition material (14) are bonded in the fibrous sheet with a binder.

13. Filter material according to Claim 12,
**characterized in that** polyacrylate (Acronal^{®}) is provided as the binder.

14. Filter material according to one of Claims 1 to 13,
**characterized in that** transverse separating walls (16) are incorporated in the hollow fibres (13b) at specific intervals.

15. Filter material according to Claim 14,
**characterized in that** the transverse separating walls (16) are formed of ethylene phenylacetate.

16. Process for the production of a filter material for filter bags for infusions, according to one of Claims 1 to 15, from one or more layers of fibrous sheets on a paper machine,
**characterized in that** hollow fibres (13b) in which phase transition materials (14) are incorporated, or microcapsules (13a) with phase transition materials (14) which are added to the at least one fibrous sheet (11), are added to at least one fibrous sheet (11) produced on the paper machine, for the extraction of product to be filtered that is present in the filter bags, the phase transition of the phase transition materials (14) between the solid and liquid phases taking place between 0 and 120°C and the weight per unit area of the filter material being between 8 and 90 g/m².

17. Process according to Claim 16,
**characterized in that** one or more phase transition materials (14) are used whose phase transition between the solid and liquid phases is between 50 and 100°C.

18. Process for the production of a filter material according to Claim 16 or 17,
**characterized in that** the hollow fibres (13b) or microcapsules (13a) with phase transition material (14) are applied to the filter material from an applicator on the paper machine in an amount of 2 to 30 wt.%, based on the weight per unit area of the filter material.

19. Process for the production of a filter material according to Claim 18,
**characterized in that** the hollow fibres (13b) or microcapsules (13a) with phase transition material (14) are applied to the filter material from an applicator on the paper machine in an amount of 3 to 10 wt.%, based on the weight per unit area of the filter material.

20. Process according to one of Claims 16 to 19,
**characterized in that** the hollow fibres (13b) or microcapsules (13a) with phase transition material (14) are incorporated into one of the fibrous sheets to be produced, especially the first of two layers of fibrous sheets (11, 12) to be produced, the first sheet containing natural fibres.

21. Process according to one of Claims 16 to 20,
**characterized in that** the hollow fibres (13b) or microcapsules (13a) in the fibrous sheet to be produced, especially the first fibrous sheet (11), are bonded in the filter material with a binder.

22. Process according to Claim 21,
**characterized in that** polyacrylate (Acronal^{®}) is used as the binder.

23. Tea bags, tea filters, coffee bags or coffee filters made up of one or more layers of fibrous sheets,
**characterized in that**, for the extraction of product to be filtered that is present in the filter bags, the at least one fibrous sheet (11, 12) is provided with hollow fibres (13b) in which phase transition materials (14) are incorporated, or microcapsules (13a) with phase transition materials (14) which are added to the at least one fibrous sheet (11), the phase transition of the phase transition materials (14) between the solid and liquid phases being between 0 and 120°C and the weight per unit area of the filter material being between 8 and 90 g/m².

24. Tea bags, tea filters, coffee bags or coffee filters according to Claim 23,
**characterized in that** two layers of fibrous sheets (11, 12) are provided, the first sheet (11) comprising natural fibres and the hollow fibres (13b) or microcapsules (13a), and the second fibrous sheet (12), made up of sealable fibres, especially polymer fibres, being applied to the first fibrous sheet (11).

## Revendications

1. Matériau filtrant fait d'une ou de plusieurs strates de couches de fibres pour la fabrication de sachets filtrants ou de sacs filtrants pour boissons infusées,
**caractérisée en ce que**
la au moins une couche de fibres (11) destinée à l'infusion d'une matière à filtrer contenue dans les sachets et sacs contient des fibres creuses (13b) dans lesquelles sont chargés des matériaux à transition de phase (14) ou des microcapsules (13a) comportant des matériaux à transition de phase (14) qui sont ajoutées à la au moins une couche de fibres (11), la transition de phase de solide à liquide des matériaux à transition de phase (14) se produisant dans une plage de 0 à 120 °C, et le poids par unité de surface du matériau filtrant étant compris entre 8 et 90 g/m².

2. Matériau filtrant selon la revendication 1,
**caractérisée en ce que**
il est prévu des matériaux à transition de phase (14) dont la transition de phase de solide à liquide se produit dans une plage de 50 à 100 °C.

3. Matériau filtrant selon la revendication 1 ou 2,
**caractérisée en ce que**
le matériau à transition de phase (14) contient des hydrocarbures.

4. Matériau filtrant selon la revendication 3,
**caractérisée en ce que**
des hydrocarbures paraffiniques peuvent être utilisés.

5. Matériau filtrant selon la revendication 1,
**caractérisée en ce que**
des sels hydratés, cires, huiles, acides gras, esters d'acides gras, acides et esters dibasiques, alcools primaires, alcools polyhydriques, chlathrates, semi-clathrates, anhydrides stéariques, carbonates d'éthylène, polymères et mélanges de ces substances sont utilisés comme matériau à transition de phase (14).

6. Matériau filtrant selon la revendication 1,
**caractérisée en ce que**
les fibres creuses (13b) ou microcapsules (13a) sont présentes selon une quantité comprise entre 1 et 70 % en poids, rapportée au poids par unité de surface du matériau filtrant.

7. Matériau filtrant selon la revendication 6,
**caractérisée en ce que**
les fibres creuses (13b) ou microcapsules (13a) sont présentes selon une quantité comprise entre 2 et 30 % en poids, rapportée au poids par unité de surface du matériau filtrant.

8. Matériau filtrant selon la revendication 7,
**caractérisée en ce que**
les fibres creuses (13b) ou les microcapsules (13a) sont présentes selon une quantité comprise entre 3 et 10 % en poids, rapportée au poids par unité de surface du matériau filtrante.

9. Matériau filtrant selon la revendication 1,
**caractérisée en ce que**
le poids par unité de surface est compris entre 10 et 25 g/m².

10. Matériau filtrant selon la revendication 1,
**caractérisée en ce que**
il comporte deux strates de couches de fibres (11, 12), la première couche (11) comprenant des fibres naturelles et les fibres creuses (13b) ou les microcapsules (13a) et la seconde couche de fibres (12) faite de fibres soudables, en particulier de fibres de polymère, étant déposée sur la première couche de fibres (11).

11. Matériau filtrant selon la revendication 10,
**caractérisée en ce que**
la première couche de fibres (11) faite de fibres naturelles, comprend de la cellulose de bois de résineux, de la cellulose de bois de feuillus, des fibres d'Abaca ou un mélange de ces fibres.

12. Matériau filtrant selon l'une des revendications 1 à 11, **caractérisée en ce que**
les fibres creuses (13b) ou les microcapsules (13a) comportant un matériau à transition de phase (14) sont liées dans la couche de fibres au moyen d'un liant.

13. Matériau filtrant selon la revendication 12,
**caractérisée en ce que**
le liant est un polycarbonate (Acronal®).

14. Matériau filtrant selon l'une des revendications 1 à 13, **caractérisée en ce que**
il comporte des parois transversales séparatrices (16) à certains intervalles dans les fibres creuses (13b).

15. Matériau filtrant selon la revendication 14,
**caractérisée en ce que**
les parois transversales séparatrices (16) sont faites de phénylacétate d'éthylène.

16. Procédé pour fabriquer sur une machine à papier un matériau filtrant pour sachets filtrants et sacs filtrants pour boissons infusées fait d'une ou plusieurs strates de couches de fibres selon l'une des revendications 1 à 15,
**caractérisé en ce que**
à au moins une couche de fibres (11) fabriquée sur une machine à papier, destinée à l'infusion d'une matière à filtrer contenue dans les sachets filtrants ou sacs filtrants, sont ajoutées des fibres creuses (13b) dans lesquelles sont chargés des matériaux à transition de phase (14), ou des microcapsules (13a) comportant des matériaux à transition de phase (14) qui sont ajoutés à la au moins une couche de fibres (11), la transition de phase entre la phase solide et la phase liquide des matériaux à transition de phase (14) se trouvant entre 0 et 120 °C et le poids par unité de surface du matériau filtrant étant compris entre 8 et 90 g/m².

17. Procédé selon la revendication 16,
**caractérisé en ce que**
l'on utilise un ou plusieurs matériaux à transition de phase (14) dont la transition de phase entre la phase solide et la phase liquide se trouve entre 50 et 100 °C.

18. Procédé de fabrication d'un matériau filtrant selon la revendication 16 ou 17,
**caractérisé en ce que**
les fibres creuses (13b) ou microcapsules (13a) contenant un matériau à transition de phase (14) sont déposées sur le matériau filtrant dans un dispositif de dépôt de la machine à papier en une quantité de 2 à 30 % en poids, rapportée au poids par unité de surface du matériau filtrant.

19. Procédé de fabrication d'un matériau filtrant selon la revendication 18, **caractérisé en ce que**
les fibres creuses (13b) ou microcapsules (13a) contenant un matériau à transition de phase (14) sont déposées sur le matériau filtrant dans un dispositif de dépôt de la machine à papier en une quantité de 3 à 10 % en poids, rapportée au poids par unité de surface du matériau filtrante.

20. Procédé selon l'une des revendications 16 à 19,
**caractérisé en ce que**
les fibres creuses (13b) ou microcapsules (13a) contenant un matériau à transition de phase (14) sont chargées dans une des couches de fibres à produire, en particulier dans la première de deux strates.de couches de fibres à fabriquer (11, 12), la première couche comportant des fibres naturelles.

21. Procédé selon l'une des revendications 16 à 20,
**caractérisé en ce que**
les fibres creuses (13b) ou les microcapsules (13a) contenues dans les couches de fibres à fabriquer, en particulier dans la première couche de fibres (11), sont liées dans le matériau filtrant par un liant.

22. Procédé selon la revendication 21,
**caractérisé en ce que**
l'on utilise comme liant un polyacrylate (Acronal®).

23. Sachet de thé, filtre à thé, sachet de café ou filtre à café composé d'une ou de plusieurs strates de couches de fibres,
**caractérisé en ce que**
la au moins une couche de fibres (11, 12) destinée à l'infusion d'une matière à filtrer contenue dans les sachets filtrants et sacs filtrants est pourvue de fibres creuses (13b) dans lesquelles sont chargés des matériaux à transition de phase (14) ou des microcapsules (13a) comportant des matériaux à transition de phase (14) qui sont ajoutées à la au moins une couche de fibres (11), la transition de phase des matériaux à transition de phase (14) entre la phase solide et la phase liquide se trouvant entre 0 et 120 °C et le poids par unité de surface du matériau filtrant étant compris entre 8 et 90 g/m².

24. Sachet de thé, filtre à thé, sachet de café ou filtre à café selon la revendication 23,
**caractérisé en ce que**
il comporte deux strates de couches de fibres (11, 12), la première couche (11) comprenant des fibres naturelles et des fibres creuses (13b) ou des microcapsules (13a) et la seconde couche de fibres (12) faite de fibres soudables, en particulier de fibres de polymère, étant déposée sur la première couche de fibres (11).
